# EUROPÄISCHE PATENTSCHRIFT

(11) **EP 3 820 749 B1**
(45) Veröffentlichungstag und Bekanntmachung des Hinweises auf die Patenterteilung: **13.09.2023**
(21) Anmeldenummer: 19729723.7
(22) Anmeldetag: 06.06.2019
(51) Int. Cl.: B60T 8/36

(54) **STEUERVORRICHTUNG UND VERFAHREN ZUM ELEKTRISCHEN SCHALTEN EINES ZWEISTUFIGEN MAGNETVENTILS**
CONTROL DEVICE AND METHOD FOR ELECTRICALLY SWITCHING A TWO-STAGE SOLENOID VALVE
DISPOSITIF DE COMMANDE ET PROCÉDÉ DE COMMUTATION ÉLECTRIQUE D'UNE ÉLECTROVANNE À DEUX ÉTAGES

(30) Priorität: 13.07.2018 DE 102018211686
(43) Veröffentlichungstag der Anmeldung: 19.05.2021
(73) Patentinhaber: Robert Bosch GmbH, 70442 Stuttgart (DE)
(72) Erfinder: BENZLER, Steffen, 71735 Eberdingen (DE); NAGAKURA, Yasutaka, 70469 Stuttgart (DE)
(86) Internationale Anmeldenummer: PCT/EP2019/064797
(87) Internationale Veröffentlichungsnummer: WO 2020/011455

(56) Entgegenhaltungen:
- DE-A1-102010 029 384
- DE-A1-102016 124 122
- DE-A1-102016 226 272
- US-A- 5 645 097
- US-A1- 2005 006 951

## Beschreibung

Die Erfindung betrifft eine Steuervorrichtung für ein zweistufiges Magnetventil. Ebenso betrifft die Erfindung ein Bremssystem für ein Fahrzeug. Des Weiteren betrifft die Erfindung ein Verfahren zum elektrischen Schalten eines zweistufigen Magnetventils.

### Stand der Technik

In der DE 10 2016 226 272 A1 sind ein Verfahren und eine Vorrichtung zur Ansteuerung eines als Bremsventil in einem Bremssystem eines Kraftfahrzeugs eingesetzten Magnetventils beschrieben. Das Magnetventil ist als zweistufiges Magnetventil wahlweise in seinen unbestromten offenen Schaltzustand oder in seinen bestromten geschlossenen Schaltzustand schaltbar. Durch Steigerung einer Stromstärke eines Stroms durch eine Magnetspule des Magnetventils wird das Magnetventil somit in seinen bestromten geschlossenen Schaltzustand geschaltet, während das Magnetventil mittels einer Reduzierung der Stromstärke des Stroms durch seine Magnetspule in seinen unbestromten offenen Schaltzustand schaltbar ist. Bei der in der DE 10 2016 226 272 A1 beschriebenen Ansteuerung des Magnetventils wird auch ein sogenannter Komfortpuls während des Variierens der Stromstärke des Stroms zum Schalten des Magnetventils durch seine Magnetspule geleitet, wodurch eine Abstrahlung eines hörbaren Schalls beim Schalten des Magnetventils reduzierbar sein soll.

Außerdem beschreibt die DE 10 2010 029 384 A1 ein Verfahren zur Steuerung des Drucks in einem Hydrauliksystem, bei welchen ein Magnetventil, welches mittels eines Spulenstroms mit einer ersten Stromstärke in seine geschlossene Stellung schaltbar ist, zwischenzeitlich durch einen zwischen einer zweiten Stromstärke und einer dritten Stromstärke wechselnden Spulenstrom in eine teilgeöffnete Stellung geschalten wird, wobei die dritte Stromstärke kleiner als die erste Stromstärke ist und die zweite Stromstärke kleiner als die dritte Stromstärke ist.

Des Weiteren offenbart die US 2005/0006951 A1 ein elektromagnetisches Ventil, welches bei einem Spulenstrom mit einer ersten Stromstärke gleich null in seiner vollständig offenen Stellung, bei einem Spulenstrom mit einer zweiten Stromstärke ungleich null in seiner Drosselstellung und bei einem Spulenstrom mit einer dritten Stromstärke größer als der zweiten Stromstärke in seiner geschlossenen Stellung vorliegt.

### Offenbarung der Erfindung

Die Erfindung schafft eine Steuervorrichtung für ein zweistufiges Magnetventil mit den Merkmalen des Anspruchs 1, ein Bremssystem für ein Fahrzeug mit den Merkmalen des Anspruchs 4 und ein Verfahren zum elektrischen Schalten eines zweistufigen Magnetventils mit den Merkmalen des Anspruchs 7.

### Vorteile der Erfindung

Die vorliegende Erfindung schafft verbesserte Möglichkeiten zum Schalten eines zweistufigen Magnetventils, welches lediglich in seinen unbestromten Schaltzustand oder in seinen bestromten Schaltzustand schaltbar ist, aus seinem bestromten Schaltzustand in seinen unbestromten Schaltzustand, indem während des Schaltzeitintervalls durch Steigerung der Stromstärke des Schaltsignals mindestens zweimal für je das vorgegebene Pulszeitintervall auf den vorgegebenen Strompulswert einer unerwünscht starken Beschleunigung eines verstellbaren Ventilelements des Magnetventils so entgegengewirkt wird, dass ein hartes und lautes Anschlagen des verstellbaren Ventilelements (z.B. an einem Ventilsitz des Magnetventils) verhindert ist. Die vorliegende Erfindung verbessert damit das NVH-Verhalten (Noise Vibration Harshness) beim Schalten des Magnetventils. Sogenannte "Ventilschaltgeräusche" oder "Ventilklopfgeräusche" sind somit beim erfindungsgemäßen Schalten des Magnetventils verringert/eliminiert.

In einer vorteilhaften Ausführungsform der Steuervorrichtung ist die Ansteuereinrichtung dazu ausgelegt, während des Schaltzeitintervalls die Stromstärke des Schaltsignals mindestens dreimal für je das vorgegebene Pulszeitintervall auf den vorgegebenen Strompulswert zu steigern. Die vergleichsweise hohe Anzahl von während des Schaltzeitintervalls ausgeführten Pulsintervallen erlaubt einen schnellen Wechsel zwischen einem Pulszeitintervall und einem nachfolgenden Zwischenzeitintervall, bzw. einem Zwischenzeitintervall und einem nachfolgenden Pulszeitintervall. Mittels des vergleichsweise häufigen Wechsels zwischen den zwei verschiedenen Intervalltypen kann das verstellbare Ventilelement verlässlich zum Schalten des Magnetventils verstellt werden, während gleichzeitig eine unerwünscht hohe Beschleunigung des verstellbaren Ventilelements verhindert ist.

Vorzugsweise ist die Ansteuereinrichtung zusätzlich dazu ausgelegt, während des Schaltzeitintervalls die Stromstärke des Schaltsignals während jedes Zwischenzeitintervalls zwischen zwei nacheinander folgenden Pulszeitintervallen auf einen jeweiligen Zwischenwert derart einzustellen, dass jeder der Zwischenwerte größer als ein später in dem gleichen Schaltzeitintervall eingehaltener Zwischenwert eines späteren Zwischenzeitintervalls ist. Die Stromstärke des Schaltsignals kann somit während der Zwischenzeitintervalle gemäß einer vorgegebenen Funktion reduziert werden, während zwischen den Zwischenzeitintervallen die Pulszeitintervalle einer unerwünscht starken Beschleunigung des verstellbaren Ventilelements entgegenwirken. Dies verbessert das NVH-Verhalten des Magnetventils bei einem Schalten aus seinem bestromten Schaltzustand in seinen unbestromten Schaltzustand, während gleichzeitig die gewünschte Schaltung des Magnetventils verlässlich ausführbar bleibt.

Die vorausgehend beschriebenen Vorteile sind vor allem bei einem Bremssystem für ein Fahrzeug mit einer derartigen Steuervorrichtung und dem mittels der Steuervorrichtung ansteuerbaren zweistufigen Magnetventil gewährleistet. Durch die mittels der vorteilhaften Ausbildung der Steuervorrichtung verringerten/eliminierten "Ventilschaltgeräusche" oder "Ventilklopfgeräusche" beim Schalten des zweistufigen Magnetventils aus seinem bestromten Schaltzustand in seinen unbestromten Schaltzustand braucht keine Irritierung von Personen in dem Fahrzeug durch derartige Geräusche befürchtet werden. Die Ausstattung des Bremssystems mit der Steuervorrichtung steigert damit einen Komfort der Personen in dem Fahrzeug.

Beispielsweise kann das zweistufige Magnetventil ein stromlos-geschlossenes Magnetventil oder ein stromlos-offenes Magnetventil sein. Ebenso kann das zweistufige Magnetventil ein Radeinlassventil oder ein Radauslassventil sein. Somit kann die Erfindung für eine Vielzahl von häufig eingesetzten Ventiltypen vorteilhaft genutzt werden. Es wird jedoch darauf hingewiesen, dass eine Ausbildbarkeit des zweistufigen Magnetventils nicht auf Radeinlassventile oder Radauslassventile beschränkt ist.

Die oben beschriebenen Vorteile sind auch mittels eines Ausführens eines korrespondierenden Verfahrens zum elektrischen Schalten eines zweistufigen Magnetventils bewirkbar. Es wird ausdrücklich darauf hingewiesen, dass das Verfahren zum elektrischen Schalten eines zweistufigen Magnetventils gemäß den oben erläuterten Ausführungsformen der Steuervorrichtung und/oder des Bremssystems weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: ein Flussdiagramm und ein Koordinatensystem zum Erläutern einer Ausführungsform des Verfahrens zum elektrischen Schalten eines zweistufigen Magnetventils; und
- Fig. 2: eine schematische Darstellung der Steuervorrichtung, bzw. eines damit ausgestatteten Bremssystems für ein Fahrzeug.

### Ausführungsformen der Erfindung

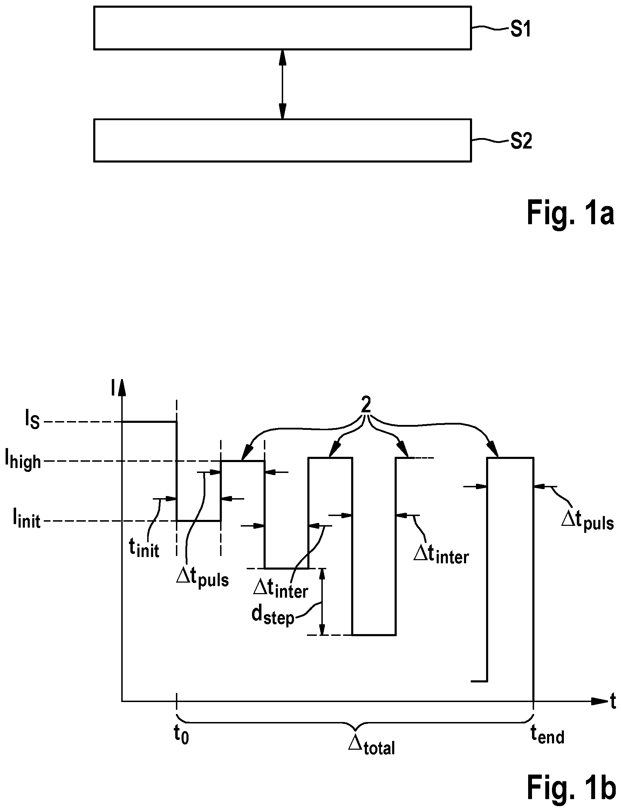

Fig. 1a und 1b zeigen ein Flussdiagramm und ein Koordinatensystem zum Erläutern einer Ausführungsform des Verfahrens zum elektrischen Schalten eines zweistufigen Magnetventils.

Unter dem mittels des im Weiteren beschriebenen Verfahrens elektrisch geschalteten zweistufigen Magnetventil ist ein Schaltventil zu verstehen, welches lediglich in seinen bestromten Schaltzustand oder in seinen unbestromten Schaltzustand schaltbar ist. Das zweistufige Magnetventil kann somit nur zwischen diesen zwei Schaltzuständen hin- und hergeschaltet werden. Entweder in seinem bestromten Schaltzustand oder in seinem unbestromten Schaltzustand liegt das zweistufige Magnetventil geschlossen vor, während das zweistufige Magnetventil in dem anderen der beiden Schaltzustände offen vorliegt. Das zweistufige Magnetventil kann somit ein stromlos-geschlossenes Magnetventil oder ein stromlos-offenes Magnetventil sein.

Vorzugsweise wird das im Weiteren beschriebene Verfahren zum elektrischen Schalten eines zweistufigen Magnetventils eines Bremssystems eines Fahrzeugs/Kraftfahrzeugs ausgeführt. Die Vorteile des nachfolgend beschriebenen Verfahrens können somit in einer räumlichen Umgebung genutzt werden, in welcher anwesende Personen leicht durch Geräusche irritiert werden. Beispielsweise kann als das zweistufige Magnetventil ein Radeinlassventil oder ein Radauslassventil des Bremssystems elektrisch geschaltet werden. Es wird jedoch darauf hingewiesen, dass eine Ausführbarkeit des im Weiteren beschriebenen Verfahrens weder auf eine bestimmte räumliche Umgebung noch auf einen speziellen Ventiltyp eingeschränkt ist.

In einem Verfahrensschritt S1 des Verfahrens zum elektrischen Schalten des zweistufigen Magnetventils wird das Magnetventil aus seinem unbestromten Schaltzustand in seinen bestromten Schaltzustand geschaltet. Dies geschieht durch Steigern einer Stromstärke I eines als Schaltsignal durch mindestens eine Magnetspule des Magnetventils fließenden Stroms von (nahezu) null auf eine Schaltstromstärke l_{S} größer-gleich einer durch die Ausbildung des Magnetventils vorgegebenen Haltestromstärke. Unter der Haltestromstärke ist eine gerade noch ausreichende Stromstärke, mittels welcher das Magnetventil aus seinem unbestromten Schaltzustand in seinen bestromten Schaltzustand schaltbar/haltbar ist, zu verstehen. Der durch die mindestens eine Magnetspule des Magnetventils fließende Strom mit der Schaltstromstärke l_{S} bewirkt ein Magnetfeld, welches ausreichend ist zum Verstellen eines verstellbaren Ventilelements des Magnetventils aus seiner zu dem unbestromten Schaltzustand korrespondierenden Ausgangsposition in eine dem bestromten Schaltzustand entsprechende Endposition, wobei mindestens einer Feder des Magnetventils der Verstellbewegung des verstellbaren Ventilelements aus der Ausgangsposition in die Endposition entgegen wirkt.

In einem abwechselnd mit dem Verfahrensschritt S1 ausgeführten Verfahrensschritt S2 wird das Magnetventil aus seinem bestromten Schaltzustand in seinen unbestromten Schaltzustand geschaltet. Dies geschieht durch Einstellen der Stromstärke I des Schaltsignals während eines Schaltzeitintervalls Δₜₒₜₐₗ auf mindestens einen Stromstärkewert zwischen null und der Schaltstromstärke l_{S} und Reduzieren der Stromstärke I des Schaltsignals nach dem Schaltzeitintervall Δₜₒₜₐₗ auf (nahezu) null. Außerdem wird die Stromstärke I des Schaltsignals während des Schaltzeitintervalls Δₜₒₜₐₗ mindestens zweimal für je ein vorgegebenes Pulszeitintervall Δtₚᵤₗₛ auf einen vorgegebenen Strompulswert l_{high} zwischen null und der Schaltstromstärke l_{S} gesteigert. In den Zeiten des Schaltzeitintervalls Δₜₒₜₐₗ außerhalb der Pulszeitintervalle Δtₚᵤₗₛ hingegen wird die Stromstärke I des Schaltsignals auf mindestens einen Stromstärkewert größer null und kleiner als der vorgegebenen Strompulswert l_{high} eingestellt.

Fig. 1b zeigt ein Koordinatensystem, dessen Abszisse eine Zeitachse t ist, während mittels der Ordinate des Koordinatensystems die Stromstärke I des als Schaltsignal durch die mindestens eine Magnetspule des Magnetventils geleiteten Stroms wiedergegeben ist.

Beispielhaft wird in den Zeiten t von 0 bis zu einem Zeitpunkt t₀ das Magnetventil mittels der Schaltstromstärke l_{S} von 250 mA (Milliampere) in seinem bestromten Schaltzustand gehalten.

Ab der Zeit t₀ wird mit dem Ausführen des Verfahrensschritts S2 begonnen, indem während des nachfolgenden Schaltzeitintervalls Δₜₒₜₐₗ zwischen den Zeiten t₀ und t_{end} die Stromstärke I des Schaltsignals auf den mindestens einen Stromstärkewert zwischen (nahezu) null und der Schaltstromstärke I_{S} eingestellt wird. Während des Schaltzeitintervalls Δₜₒₜₐₗ werden außerdem mindestens zwei sogenannte Hochstrompulse 2 durch die mindestens eine Magnetspule des Magnetventils geleitet, indem die Stromstärke I des Schaltsignals mindestens zweimal je für das vorgegebene Pulszeitintervall Δtₚᵤₗₛ auf den vorgegebenen Strompulswert l_{high} zwischen null und der vorgegebenen Schaltstromstärke I_{S} gesteigert wird. Der Strompulswert l_{high} kann beispielsweise bei 120 mA (Milliampere) liegen.

Während des Schaltzeitintervalls Δₜₒₜₐₗ ist die Stromstärke I des Schaltsignals zumindest zeitweise nicht mehr ausreichend zum Bewirken des der mindestens einen Feder des Magnetventils entgegen wirkenden Magnetfelds. Das verstellbare Ventilelements des Magnetventils wird deshalb von der mindestens einen Feder aus seiner Endposition wieder in Richtung zu seiner Ausgangsposition gedrückt. Die mindestens zwei während des Schaltzeitintervalls Δₜₒₜₐₗ durch die mindestens eine Magnetspule des Magnetventils geleiteten Hochstrompulse 2 bewirken allerdings eine kurzzeitige "Erholung" des Magnetfelds, bzw. eine kurzzeitige Steigerung seiner Magnetkraft, wodurch die Wirkung der mindestens einen Feder bezüglich einer Beschleunigung des verstellbaren Ventilelements des Magnetventils zeitweise abgeschwächt wird. Die mindestens zwei während des Schaltzeitintervalls Δₜₒₜₐₗ ausgeführten Hochstrompulse 2 bewirken deshalb eine leichte Verzögerung des mittels der mindestens einen Feder angetriebenen Ventilelements. Damit wirken die mindestens zwei Hochstrompulse 2 einer unerwünscht starken Beschleunigung des verstellbaren Ventilelements entgegen. Ein hartes oder lautes Anschlagen des mittels der mindestens einen Feder verstellten Ventilelements in seiner Ausgangsposition (z.B. an einem Ventilsitz des Magnetventils) kann somit mittels der mindestens zwei Hochstrompulse 2 verhindert werden. Damit müssen auch keine "Ventilschaltgeräusche" oder "Ventilklopfgeräusche" beim Ausführen des Verfahrensschritts S2 befürchtet werden. Personen in einer räumlichen Umgebung des Magnetventils, wie beispielsweise Insassen eines mit dem Magnetventil ausgestatteten Fahrzeugs/Kraftfahrzeugs, werden deshalb auch nicht durch derartige Geräusche irritiert. Mittels der mindestens zwei Hochstrompulse 2 können die unerwünschten "Ventilschaltgeräusche" oder "Ventilklopfgeräusche" gegenüber dem Stand der Technik um mindestens 50 % reduziert werden.

Vorzugsweise wird während des Schaltzeitintervalls Δₜₒₜₐₗ die Stromstärke I des Schaltsignals mindestens dreimal je für das vorgegebene Pulszeitintervall Δtₚᵤₗₛ auf den vorgegebenen Strompulswert l_{high} gesteigert. Durch eine hohe Anzahl der während des Schaltzeitintervalls Δₜₒₜₐₗ durch die mindestens eine Magnetspule des Magnetventils geleiteten Hochstrompulse 2 kann vergleichsweise schnell und relativ häufig zwischen den Pulszeitintervallen Δtₚᵤₗₛ und sogenannten Zwischenzeitintervallen Δtᵢₙₜₑᵣ, wobei jedes Zwischenzeitintervall Δtᵢₙₜₑᵣ von zwei aufeinanderfolgenden Pulszeitintervallen Δtₚᵤₗₛ begrenzt ist, gewechselt werden. Jedes Pulszeitintervall Δtₚᵤₗₛ kann somit eine relativ kurze Dauer zwischen 1 ms (Millisekunde) bis 10 ms (Millisekunden), z.B. eine Dauer von 5 ms (Millisekunden), haben. Entsprechend kann auch jedes Zwischenzeitintervall Δtᵢₙₜₑᵣ eine vergleichsweise kurze Dauer zwischen 1 ms (Millisekunde) und 10 ms (Millisekunden), beispielsweise eine Dauer von 5 ms (Millisekunden), aufweisen. Der auf diese Weise bewirkte häufige Wechsel zwischen den Pulszeitintervallen Δtₚᵤₗₛ und den Zwischenzeitintervallen Δtᵢₙₜₑᵣ wirkt einer zu starken Beschleunigung des verstellbaren Ventilelements des Magnetventils während seiner Verstellbewegung aus der Endposition in die Ausgangsposition verlässlich entgegen.

In der mittels der Fig. 1a und 1b wiedergegebenen Ausführungsform des Verfahrens wird die Stromstärke I des Schaltsignals während jedes Zwischenzeitintervalls Δtᵢₙₜₑᵣ auf einen jeweiligen Zwischenwert derart eingestellt, dass jeder der Zwischenwerte größer als ein später in dem gleichen Schaltzeitintervall Δtᵢₙₜₑᵣ eingehaltener Zwischenwert eines späteren Zwischenzeitintervalls Δtᵢₙₜₑᵣ ist. Beispielsweise kann der jeweilige Zwischenwert zwischen zwei nacheinander folgenden Zwischenzeitintervallen Δtᵢₙₜₑᵣ um eine fest vorgegebene Stufenhöhe dₛₜₑₚ schrittweise reduziert werden. Die Stufenhöhe dₛₜₑₚ kann beispielsweise 15 mA (Milliampere) betragen. Auf diese Weise ist sicherstellbar, dass trotz des vergleichsweise häufigen Ausführens von Hochstrompulsen 2 das Magnetventil verlässlich aus seinem bestromten Schaltzustand in seinen unbestromten Schaltzustand geschaltet wird und dennoch keine "Ventilschaltgeräusche" oder "Ventilklopfgeräusche" zu befürchten sind. Ein weiterer Vorteil des schrittweise Reduzierens des in den Zwischenzeitintervallen Δtᵢₙₜₑᵣ jeweils eingehaltenen Zwischenwerts um die Stufenhöhe dₛₜₑₚ liegt darin, dass bei dieser Ausführungsform die Haltestromstärke, ab welcher das Magnetventil aus seinem unbestromten Schaltzustand in seinen bestromten Schaltzustand schaltbar/haltbar ist, nicht bekannt sein muss.

Wie anhand des Koordinatensystems der Fig. 1b erkennbar ist, kann zu Beginn des Schaltzeitintervalls Δₜₒₜₐₗ die Stromstärke I zuerst ausgehend von der Schaltstromstärke l_{S} für eine vorgegebene Zeitspanne tᵢₙᵢₜ auf eine Ausgangs-Stromstärke lᵢₙᵢₜ reduziert werden. Nach Ablauf der vorgegebenen Zeitspanne tᵢₙᵢₜ wird dann erster Hochstrompuls 2 ausgeführt. Die Ausgangs-Stromstärke lᵢₙᵢₜ kann beispielsweise bei 80 mA (Milliampere) liegen. Die vorgegebene Zeitspanne tᵢₙᵢₜ kann z.B. 5 ms (Millisekunden) betragen. In dem auf den ersten Hochstrompuls 2 folgenden ersten Zwischenzeitintervall Δtᵢₙₜₑᵣ kann dann die Stromstärke I gegenüber der Ausgangs-Stromstärke lᵢₙᵢₜ um die Stufenhöhe dₛₜₑₚ reduziert sein.

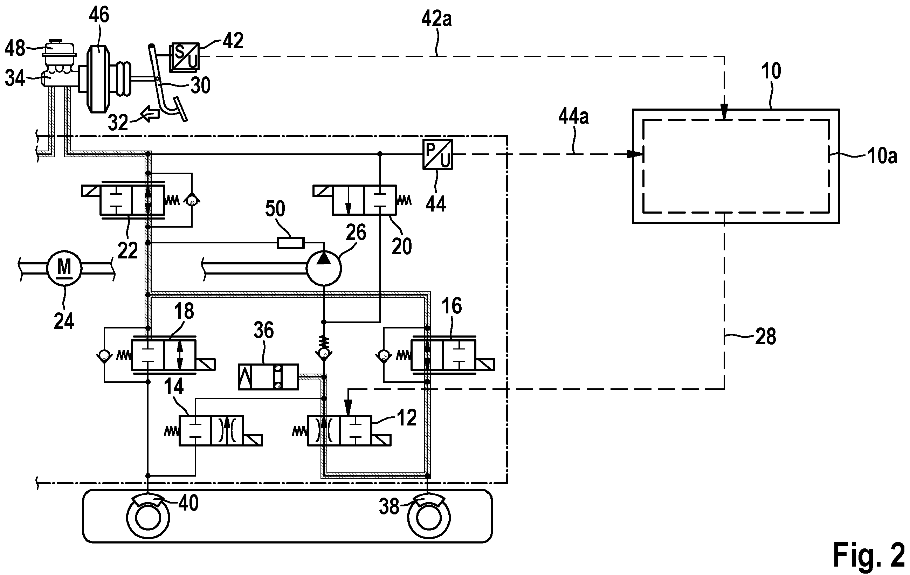

Fig. 2 zeigt eine schematische Darstellung der Steuervorrichtung, bzw. eines damit ausgestatteten Bremssystems für ein Fahrzeug.

Die in Fig. 2 schematisch dargestellte Steuervorrichtung 10 ist zum elektrischen Schalten eines zweistufigen Magnetventils 12 ausgelegt. Unter der zweistufigen Ausbildung des Magnetventils 12 ist zu verstehen, dass das Magnetventil 12 lediglich in seinen unbestromten Schaltzustand oder in seinen bestromten Schaltzustand schaltbar ist. Somit kann das in Fig. 2 als stromlos-geschlossenes Magnetventil 12 skizzierte Magnetventil 12 in einer anderen Ausführungsform auch ein stromlos-offenes Magnetventil sein.

In dem Beispiel der Fig. 2 ist das mittels der Steuervorrichtung 10 schaltbare zweistufige Magnetventil 12 beispielhaft ein Ventil eines Bremssystems für ein Fahrzeug, wobei auch die Steuervorrichtung 10 eine Komponente des Bremssystems sein kann. Es wird jedoch darauf hingewiesen, dass eine Verwendbarkeit der Steuervorrichtung 10 nicht auf einen bestimmten Einsatzzweck des damit schaltbaren Magnetventils 12 limitiert ist. Auch die Ausbildung des mittels der Steuervorrichtung 10 schaltbaren Magnetventils 12 als Radauslassventil 12 und 14 ist nur beispielhaft zu interpretieren. Mittels der Steuervorrichtung 10 können beispielsweise auch ein Radeinlassventil 16 und 18, ein Hochdruckschaltventil 20 und/oder ein Umschaltventil 22 ansteuerbar sein. Eine Funktionalität der Steuervorrichtung 10 ist des Weiteren auch nicht auf das elektrische Schalten nur des einen Magnetventils 12, wie in Fig. 2 bildlich dargestellt, beschränkt. Stattdessen können mittels der im Weiteren beschriebenen Vorgehensweise auch mehrere Ventile, wie beispielsweise alle Ventile 12 bis 22 des Bremssystems, schaltbar sein. Obwohl in Fig. 2 nur ein Bremskreis des Bremssystem dargestellt ist, können auch die Ventile 12 bis 22 mehrerer Bremskreise mittels der Steuervorrichtung 10 geschaltet werden. Auch weitere Komponenten des in Fig. 2 skizzierten Bremssystems, wie beispielsweise ein Pumpenmotor 24 mindestens einer Pumpe 26, können mittels der Steuervorrichtung 10 schaltbar sein.

Die Steuervorrichtung 10 weist eine Ansteuereinrichtung 10a auf, welche dazu ausgelegt ist, einen durch mindestens eine Magnetspule des Magnetventils 12 fließenden Strom als Schaltsignal 28 an das Magnetventil 12 auszugeben. Das Magnetventil 12 ist mittels der Ansteuereinrichtung 10a aus seinem unbestromten Schaltzustand in seinen bestromten Schaltzustand schaltbar, indem die Ansteuereinrichtung 10a dazu ausgelegt ist, gegebenenfalls eine Stromstärke des Schaltsignals 28 von (nahezu) null auf eine Schaltstromstärke größer-gleich einer durch die Ausbildung des Magnetventils vorgegebenem Haltestromstärke, mittels welcher das Magnetventil 12 aus seinem unbestromten Schaltzustand in seinen bestromten Schaltzustand schaltbar ist, zu steigern. Das Schalten des stromlos-geschlossenen Magnetventils 12 aus seinem unbestromten Schaltzustand in seinen bestromten Schaltzustand mittels der Ansteuereinrichtung 10a kann beispielsweise erfolgen, während ein Fahrer mittels seiner auf ein Bremsbetätigungselement 30 ausgeübten Fahrerbremskraft 32 Bremsflüssigkeit aus einem nachgeordneten Hauptbremszylinder 34 in mindestens einen angebundenen Bremskreis drückt. Mittels des Schaltens des stromlos-geschlossenen Magnetventils 12 in seinen bestromten Schaltzustand kann in diesem Fall aufgrund der bewirkten Verschiebung der in den jeweiligen Bremskreis gedrückten Bremsflüssigkeit über das offen geschaltete stromlosgeschlossene Magnetventil 12 in eine nachgeordnete Speicherkammer/Niederdruckspeicherkammer 36 ein Druckaufbau in mindestens einem Radbremszylinder 38 und 40 des jeweiligen Bremskreises zu begrenzt oder verhindert werden (siehe Fig. 2). Die Betätigung des Bremsbetätigungselements 30 durch den Fahrer kann der Steuervorrichtung 10 mittels mindestens eines Sensorsignals 42a eines Bremsbetätigungselement-Sensors 42 angezeigt werden. Die Steuervorrichtung 10 kann auch dazu ausgelegt sein, anhand mindestens eines Sensorsignals 44a mindestens eines Drucksensors 44 die Begrenzung/Verhinderung des Bremsdruckaufbaus in dem jeweiligen Bremskreis zu verifizieren. Das hier beschriebene Beispiel eines "regenerativen Bremsens" mittels des Schaltens des stromlos-geschlossenen Magnetventils 12 ist jedoch nicht einschränkend zu interpretieren.

Das Magnetventil 12 ist mittels der Ansteuereinrichtung 10a außerdem auch aus seinem bestromten Schaltzustand in seinen unbestromten Schaltzustand schaltbar, indem die Ansteuereinrichtung 10a dazu ausgelegt ist, gegebenenfalls die Stromstärke des Schaltsignals 28 während eines Schaltzeitintervalls auf mindestens einen Stromstärkewert zwischen null und der Schaltstromstärke einzustellen und nach dem Schaltzeitintervall auf (nahezu) null zu reduzieren. Speziell ist die Ansteuereinrichtung 10a dazu ausgelegt, während des Schaltzeitintervalls die Stromstärke des Schaltsignals mindestens zweimal für je ein vorgegebenes Pulszeitintervall auf einen vorgegebenen Strompulswert zwischen null und der Schaltstromstärke zu steigern und in den Zeiten des Schaltzeitintervalls außerhalb der Pulszeitintervalle die Stromstärke des Schaltsignals auf mindestens einen Stromstärkewert größer null und kleiner als den vorgegebenen Strompulswert einzustellen. Damit bewirkt auch die Steuervorrichtung 10 die Vorteile des zuvor erläuterten Verfahrens.

Die Steuervorrichtung 10/ihre Ansteuereinrichtung 10a kann insbesondere zum Ausführen des oben beschriebenen Verfahrens ausgebildet sein. Beispielsweise kann die Ansteuereinrichtung 10a dazu ausgelegt sein, während des Schaltzeitintervalls die Stromstärke des Schaltsignals mindestens dreimal je für das vorgegebene Pulszeitintervall auf den vorgegebenen Strompulswert zu steigern. Vorzugsweise ist die Ansteuereinrichtung 10a auch dazu ausgelegt, während des Schaltzeitintervalls die Stromstärke des Schaltsignals während jedes Zwischenzeitintervalls zwischen zwei nacheinander folgenden Pulszeitintervallen auf einen jeweiligen Zwischenwert derart einzustellen, dass jeder der Zwischenwerte größer als ein später in dem gleichen Schaltzeitintervall eingehaltener Zwischenwert eines späteren Zwischenzeitintervalls ist.

Auch ein Bremssystem mit der Steuervorrichtung 10 bewirkt die oben beschriebenen Vorteile. Es wird jedoch ausdrücklich darauf hingewiesen, dass die in Fig. 2 bildlich wiedergegebene Ausbildung eines derartigen Bremssystems mit der Steuervorrichtung 10 nur beispielhaft zu interpretieren ist. Die Komponenten 14 bis 44, sowie ein Bremskraftverstärker 46, ein Bremsflüssigkeitsreservoir 48 und ein Filter 50, sind auch nur Beispiele für Bremssystemkomponenten eines derartigen Bremssystems.

## Patentansprüche

1. Steuervorrichtung (10) für ein zweistufiges Magnetventil (12) mit:
einer Ansteuereinrichtung (10a), welche dazu ausgelegt ist, einen durch mindestens eine Magnetspule des Magnetventils (12) fließenden Strom als Schaltsignal (28) an das Magnetventil (12) auszugeben,
wobei das Magnetventil (12) mittels der Ansteuereinrichtung (10a) aus seinem unbestromten Schaltzustand in seinen bestromten Schaltzustand schaltbar ist, indem die Ansteuereinrichtung (10a) dazu ausgelegt ist, gegebenenfalls eine Stromstärke (l) des Schaltsignals (28) von null auf eine Schaltstromstärke (lₛ) größer-gleich einer durch die Ausbildung des Magnetventils (12) vorgegebenen Haltestromstärke, mittels welcher das Magnetventil (12) aus seinem unbestromten Schaltzustand in seinen bestromten Schaltzustand schaltbar ist, zu steigern,
und wobei das Magnetventil (12) mittels der Ansteuereinrichtung (10a) aus seinem bestromten Schaltzustand in seinen unbestromten Schaltzustand schaltbar ist, zumindest indem die Ansteuereinrichtung (10a) dazu ausgelegt ist, gegebenenfalls die Stromstärke (l) des Schaltsignals (28) während eines Schaltzeitintervalls (Δₜₒₜₐₗ) auf mindestens einen Stromstärkewert zwischen null und der Schaltstromstärke (lₛ) einzustellen,
**dadurch gekennzeichnet, dass**
das mittels der Steuervorrichtung (10) elektrisch geschaltete zweistufige Magnetventil (12) lediglich in seinen bestromten Schaltzustand oder in seinen unbestromten Schaltzustand schaltbar ist, und
das Magnetventil (12) mittels der Ansteuereinrichtung (10a) aus seinem bestromten Schaltzustand in seinen unbestromten Schaltzustand schaltbar ist, indem die Ansteuereinrichtung (10a) dazu ausgelegt ist, während des Schaltzeitintervalls (Δₜₒₜₐₗ) die Stromstärke (l) des Schaltsignals (28) mindestens zweimal je für ein vorgegebenes Pulszeitintervall (Δtₚᵤₗₛ) auf einen vorgegebenen Strompulswert (l_{high}) zwischen null und der Schaltstromstärke (lₛ) zu steigern und in den Zeiten des Schaltzeitintervalls (Δₜₒₜₐₗ) außerhalb der Pulszeitintervalle (Δtₚᵤₗₛ) die Stromstärke (l) des Schaltsignals (28) auf mindestens einen Stromstärkewert größer null und kleiner als den vorgegebene Strompulswert einzustellen (l_{high}), und nach dem Schaltzeitintervall (Δₜₒₜₐₗ) die Stromstärke (l) des Schaltsignals (28) auf null zu reduzieren.

2. Steuervorrichtung (10) nach Anspruch 1, wobei die Ansteuereinrichtung (10a) dazu ausgelegt ist, während des Schaltzeitintervalls (Δₜₒₜₐₗ) die Stromstärke (l) des Schaltsignals (28) mindestens dreimal je für das vorgegebene Pulszeitintervall (Δtₚᵤₗₛ) auf den vorgegebenen Strompulswert (l_{high}) zu steigern.

3. Steuervorrichtung (10) nach Anspruch 2, wobei die Ansteuereinrichtung (10a) dazu ausgelegt ist, während des Schaltzeitintervalls (Δₜₒₜₐₗ) die Stromstärke (l) des Schaltsignals (28) während jedes Zwischenzeitintervalls (Δtᵢₙₜₑᵣ) zwischen zwei nacheinander folgenden Pulszeitintervallen (Δtₚᵤₗₛ) auf einen jeweiligen Zwischenwert derart einzustellen, dass jeder der Zwischenwerte größer als ein später in dem gleichen Schaltzeitintervall (Δₜₒₜₐₗ) eingehaltener Zwischenwert eines späteren Zwischenzeitintervalls (Δtᵢₙₜₑᵣ) ist.

4. Bremssystem für ein Fahrzeug mit:
einer Steuervorrichtung (10) nach einem der vorhergehenden Ansprüche; und
dem mittels der Steuervorrichtung (10) ansteuerbaren zweistufigen Magnetventil (12).

5. Bremssystem nach Anspruch 4, wobei das zweistufige Magnetventil (12) ein stromlos-geschlossenes Magnetventil (12) oder ein stromlos-offenes Magnetventil ist.

6. Bremssystem nach Anspruch 4 oder 5, wobei das zweistufige Magnetventil (12) ein Radeinlassventil oder ein Radauslassventil (12, 14) ist.

7. Verfahren zum elektrischen Schalten eines zweistufigen Magnetventils (12) mit den Schritten:
Schalten des Magnetventils (12) aus seinem unbestromten Schaltzustand in seinen bestromten Schaltzustand durch Steigern einer Stromstärke (l) eines als Schaltsignal (28) durch mindestens eine Magnetspule des Magnetventils (12) fließenden Stroms von null auf eine Schaltstromstärke (lₛ) größer-gleich einer durch die Ausbildung des Magnetventils (12) vorgegebenen Haltestromstärke, mittels welcher das Magnetventil (12) aus seinem unbestromten Schaltzustand in seinen bestromten Schaltzustand geschaltet wird (S1); und
Schalten des Magnetventils (12) aus seinem bestromten Schaltzustand in seinen unbestromten Schaltzustand zumindest durch Einstellen der Stromstärke (l) des Schaltsignals (28) während eines Schaltzeitintervalls (Δₜₒₜₐₗ) auf mindestens einen Stromstärkewert zwischen null und der Schaltstromstärke (l_{S});
**dadurch gekennzeichnet, dass**
als das zweistufige Magnetventil (12) ein lediglich in seinen bestromten Schaltzustand oder in seinen unbestromten Schaltzustand schaltbares zweistufiges Magnetventil (12) elektrisch geschaltet wird, und
das Schalten des Magnetventils (12) aus seinem bestromten Schaltzustand in seinen unbestromten Schaltzustand erfolgt, indem während des Schaltzeitintervalls (Δₜₒₜₐₗ) die Stromstärke (l) des Schaltsignals (28) mindestens zweimal je für ein vorgegebenes Pulszeitintervall (Δtₚᵤₗₛ) auf einen vorgegebenen Strompulswert (I_{high}) zwischen null und der Schaltstromstärke (lₛ) gesteigert wird und in den Zeiten des Schaltzeitintervalls (Δₜₒₜₐₗ) außerhalb der Pulszeitintervalle (Δtₚᵤₗₛ) die Stromstärke (l) des Schaltsignals (28) auf mindestens einen Stromstärkewert größer null und kleiner als der vorgegebene Strompulswert (I_{high}) eingestellt wird, und nach dem Schaltzeitintervall (Δₜₒₜₐₗ) die Stromstärke (l) des Schaltsignals (28) auf null (S2) reduziert wird.

8. Verfahren nach Anspruch 7, wobei während des Schaltzeitintervalls (Δₜₒₜₐₗ) die Stromstärke (l) des Schaltsignals (28) mindestens dreimal je für das vorgegebene Pulszeitintervall (Δtₚᵤₗₛ) auf den vorgegebenen Strompulswert (I_{high}) gesteigert wird.

9. Verfahren nach Anspruch 8, wobei während des Schaltzeitintervalls (Δₜₒₜₐₗ) die Stromstärke (l) des Schaltsignals (28) während jedes Zwischenzeitintervalls (Δtᵢₙₜₑᵣ) zwischen zwei nacheinander folgenden Pulszeitintervallen (Δtₚᵤₗₛ) auf einen jeweiligen Zwischenwert derart eingestellt wird, dass jeder der Zwischenwerte größer als ein später in dem gleichen Schaltzeitintervall (Δₜₒₜₐₗ) eingehaltener Zwischenwert eines späteren Zwischenzeitintervalls (Δtᵢₙₜₑᵣ) ist.

10. Verfahren nach einem der Ansprüche 7 bis 9, wobei als zweistufiges Magnetventil (12) ein Ventil (12) eines Bremssystems eines Fahrzeugs, ein Radeinlassventil und/oder ein Radauslassventil (12, 14) elektrisch geschaltet werden.

## Claims

1. Control apparatus (10) for a two-stage solenoid valve (12), having:
an actuation device (10a) which is designed to output a current, which is flowing through at least one solenoid coil of the solenoid valve (12), to the solenoid valve (12) as a switching signal (28),
wherein the actuation device (10a) can switch the solenoid valve (12) from its deenergized switching state into its energized switching state by virtue of the fact that the actuation device (10a) is designed, when required, to increase a current intensity (I) of the switching signal (28) from zero to a switching current intensity (Iₛ) that is greater than or equal to a holding current intensity predefined by the design of the solenoid valve (12), by means of which switching current intensity the solenoid valve (12) can be switched from its deenergized switching state into its energized switching state,
and wherein the actuation device (10a) can switch the solenoid valve (12) from its energized switching state into its deenergized switching state at least by virtue of the fact that the actuation device (10a) is designed, when required, to set the current intensity (I) of the switching signal (28) during a switching time interval (Δₜₒₜₐₗ) to at least one current intensity value between zero and the switching current intensity (Iₛ),
**characterized in that**
the two-stage solenoid valve (12) that is electrically switched by means of the control apparatus (10) can only be switched into its energized switching state or into its deenergized switching state, and
the actuation device (10a) can switch the solenoid valve (12) from its energized switching state into its deenergized switching state by virtue of the fact that the actuation device (10a) is designed, during the switching time interval (Δₜₒₜₐₗ), to increase the current intensity (I) of the switching signal (28) to a predefined current pulse value (I_{high}) between zero and the switching current intensity (Iₛ) at least twice for each predefined pulse time interval (Δtₚᵤₗₛ) and, during the times of the switching time interval (Δₜₒₜₐₗ) outside of the pulse time intervals (Δtₚᵤₗₛ) , to set the current intensity (I) of the switching signal (28) to at least one current intensity value that is greater than zero and less than the predefined current pulse value (I_{high}), and after the switching time interval (Δₜₒₜₐₗ) to reduce the current intensity (I) of the switching signal (28) to zero.

2. Control apparatus (10) according to Claim 1, wherein the actuation device (10a) is designed, during the switching time interval (Δₜₒₜₐₗ), to increase the current intensity (I) of the switching signal (28) to the predefined current pulse value (I_{high}) at least three times for each predefined pulse time interval (Δtₚᵤₗₛ).

3. Control apparatus (10) according to Claim 2, wherein the actuation device (10a) is designed, during the switching time interval (Δₜₒₜₐₗ), to set the current intensity (I) of the switching signal (28) during each intermediate time interval (Δtᵢₙₜₑᵣ) between two successive pulse time intervals (Δtₚᵤₗₛ) to a respective intermediate value in such a way that each of the intermediate values is greater than an intermediate value, observed later in the same switching time interval (Δₜₒₜₐₗ), of a later intermediate time interval (Δtᵢₙₜₑᵣ).

4. Brake system for a vehicle, having:
a control apparatus (10) according to one of the preceding claims; and
the two-stage solenoid valve (12) that can be actuated by means of the control apparatus (10).

5. Brake system according to Claim 4, wherein the two-stage solenoid valve (12) is a normally closed solenoid valve (12) or a normally open solenoid valve.

6. Brake system according to Claim 4 or 5, wherein the two-stage solenoid valve (12) is a wheel inlet valve or a wheel outlet valve (12, 14).

7. Method for electrically switching a two-stage solenoid valve (12) having the steps of:
switching the solenoid valve (12) from its deenergized switching state into its energized switching state by increasing a current intensity (I) of a current flowing through at least one solenoid coil of the solenoid valve (12) as a switching signal (28) from zero to a switching current intensity (Iₛ) that is greater than or equal to a holding current intensity predefined by the design of the solenoid valve (12), by means of which switching current intensity the solenoid valve (12) is switched (S1) from its deenergized switching state into its energized switching state; and
switching the solenoid valve (12) from its energized switching state into its deenergized switching state at least by setting the current intensity (I) of the switching signal (28) during a switching time interval (Δₜₒₜₐₗ) to at least one current intensity value between zero and the switching current intensity (Iₛ);
**characterized in that**,
as the two-stage solenoid valve (12), a two-stage solenoid valve (12) that can only be switched into its energized switching state or into its deenergized switching state is electrically switched, and
the solenoid valve (12) is switched from its energized switching state into its deenergized switching state by virtue of the fact that, during the switching time interval (Δₜₒₜₐₗ), the current intensity (I) of the switching signal (28) is increased to a predefined current pulse value (I_{high}) between zero and the switching current intensity (Iₛ) at least twice for each predefined pulse time interval (Δtₚᵤₗₛ), and, during the times of the switching time interval (Δₜₒₜₐₗ) outside of the pulse time intervals Δtₚᵤₗₛ), the current intensity (I) of the switching signal (28) is set to at least one current intensity value that is greater than zero and less than the predefined current pulse value (I_{high}), and after the switching time interval (Δₜₒₜₐₗ) the current intensity (I) of the switching signal (28) is reduced to zero (S2).

8. Method according to Claim 7, wherein, during the switching time interval (Δₜₒₜₐₗ), the current intensity (I) of the switching signal (28) is increased to the predefined current pulse value (I_{high}) at least three times for each predefined pulse time interval (Δtₚᵤₗₛ).

9. Method according to Claim 8, wherein, during the switching time interval (Δₜₒₜₐₗ), the current intensity (I) of the switching signal (28) during each intermediate time interval (Δtᵢₙₜₑᵣ) between two successive pulse time intervals (Δtₚᵤₗₛ) is set to a respective intermediate value in such a way that each of the intermediate values is greater than an intermediate value, observed later in the same switching time interval (Δₜₒₜₐₗ), of a later intermediate time interval (Δtᵢₙₜₑᵣ).

10. Method according to one of Claims 7 to 9, wherein, as the two-stage solenoid valve (12), a valve (12) of a brake system of a vehicle, a wheel inlet valve and/or a wheel outlet valve (12, 14) are electrically switched.

## Revendications

1. Dispositif de commande (10) destiné à une vanne magnétique à deux étages (12), ledit dispositif comprenant :
un module d'activation (10a) qui est conçu pour délivrer à la vanne magnétique (12) un courant qui s'écoule à travers au moins une bobine magnétique de la vanne magnétique (12) en tant que signal de commutation (28),
la vanne magnétique (12) pouvant être commutée de son état de commutation non excité à son état de commutation excité au moyen du module d'activation (10a) car le module d'activation (10a) est conçu pour augmenter une intensité de courant (I) du signal de commutation (28) de zéro à une intensité de courant de commutation (Iₛ) supérieure ou égale à une intensité de courant de maintien qui est spécifiée par la conception de la vanne magnétique (12) et qui permet de commuter la vanne magnétique (12) de son état de commutation non excité à son état de commutation excité,
et la vanne magnétique (12) pouvant être commutée de son état de commutation excité à son état de commutation non excité au moyen du module d'activation (10a) car le module d'activation (10a) est au moins conçu, si nécessaire, pour régler l'intensité de courant (I) du signal de commutation (28) pendant un intervalle de temps de commutation (Δₜₒₜₐₗ) à au moins une valeur de courant entre zéro et l'intensité de courant de commutation (Iₛ),
**caractérisé en ce que**
la vanne magnétique à deux étages (12), qui est commutée électriquement au moyen du dispositif de commande (10), ne peut être commutée que dans son état de commutation excité ou dans son état de commutation non excité, et
la vanne magnétique (12) peut être commutée de son état de commutation excité à son état de commutation non excité au moyen du module d'activation (10a) car le module d'activation (10a) est conçu pour augmenter l'intensité de courant (I) du signal de commutation (28) au moins deux fois pendant l'intervalle de temps de commutation (Δₜₒₜₐₗ) à une valeur d'impulsion de courant spécifié (I_{high}) entre zéro et l'intensité de courant de commutation (Iₛ) à chaque fois pendant un intervalle de temps d'impulsion spécifié (Δtₚᵤₗₛ), et régler, aux instants de l'intervalle de temps de commutation (Δₜₒₜₐₗ) situés en dehors des intervalles de temps d'impulsion (Δₜₚᵤₗₛ), l'intensité de courant (I) du signal de commutation (28) à au moins une valeur d'intensité de courant supérieure à zéro et inférieure à la valeur d'impulsion de courant spécifiée (I_{high}), et réduire, après l'intervalle de temps de commutation (Δₜₒₜₐₗ), l'intensité de courant (I) du signal de commutation (28) à zéro.

2. Dispositif de commande (10) selon la revendication 1, le module d'activation (10a) étant conçu pour augmenter l'intensité de courant (I) du signal de commutation (28) au moins trois fois pendant l'intervalle de temps de commutation (Δₜₒₜₐₗ) à la valeur d'impulsion de courant spécifiée (I_{high}), à chaque fois pour l'intervalle de temps d'impulsion spécifié (Δtpuls).

3. Dispositif de commande (10) selon la revendication 2, le module d'activation (10a) étant conçu pour régler l'intensité de courant (I) du signal de commutation (28) pendant l'intervalle de temps de commutation (Δₜₒₜₐₗ) pendant chaque intervalle de temps intermédiaire (Δtᵢₙₜₑᵣ) entre deux intervalles de temps d'impulsion successifs (Δtₚᵤₗₛ) à une valeur intermédiaire respective de manière à ce que chacune des valeurs intermédiaires soit supérieure à une valeur intermédiaire d'un intervalle de temps intermédiaire ultérieur (Δtᵢₙₜₑᵣ) qui a été maintenue ultérieurement dans le même intervalle de temps de commutation (Δₜₒₜₐₗ).

4. Système de freinage d'un véhicule comprenant :
un dispositif de commande (10) selon l'une des revendications précédentes ; et
la vanne magnétique à deux étages (12) qui peut être activée au moyen du dispositif de commande (10).

5. Système de freinage selon la revendication 4, la vanne magnétique à deux étages (12) étant une vanne magnétique (12) fermée sans courant ou une vanne magnétique ouverte sans courant.

6. Système de freinage selon la revendication 4 ou 5, la vanne magnétique à deux étages (12) étant une vanne d'admission de roue ou une vanne de sortie de roue (12, 14) .

7. Procédé de commutation électrique d'une vanne magnétique à deux étages (12), ledit procédé comprenant les étapes suivantes :
commuter la vanne magnétique (12) de son état de commutation non excité à son état de commutation excité par augmentation de l'intensité de courant (I) d'un courant, circulant à travers au moins une bobine magnétique de la vanne magnétique (12) en tant que signal de commutation (28), de zéro à une intensité de courant de commutation (Iₛ) supérieur ou égal à une intensité de courant de maintien qui est spécifiée par la conception de la vanne magnétique (12) et qui permet de commuter la vanne magnétique (12) de son état de commutation non excité à son état de commutation excité (S1) ; et
commuter la vanne magnétique (12) de son état de commutation excité à son état de commutation non excité au moins par réglage de l'intensité de courant (I) du signal de commutation (28) pendant un intervalle de temps de commutation (Δₜₒₜₐₗ) à au moins une valeur de courant entre zéro et l'intensité de courant de commutation (Iₛ) ;
**caractérisé en ce que**
la vanne magnétique à deux étages (12), qui ne peut être commutée que dans son état de commutation excité ou dans son état de commutation non excité, est commutée électriquement en tant que vanne magnétique à deux étages (12), et
la commutation de la vanne magnétique (12) étant effectuée de son état de commutation excité à son état de commutation non excité car l'intensité de courant (I) du signal de commutation (28) est augmentée au moins deux fois pendant l'intervalle de temps de commutation (Δₜₒₜₐₗ) à une valeur d'impulsion de courant (I_{high}) entre zéro et l'intensité de courant de commutation (Iₛ) à chaque fois pour un intervalle de temps d'impulsion spécifié (Δtₚᵤₗₛ) et aux instants de l'intervalle de temps de commutation (Δtₜₒₜₐₗ) en dehors des intervalles de temps d'impulsion (Δtₚᵤₗₛ) l'intensité de courant (I) du signal de commutation (28) est réglée à au moins une valeur d'intensité de courant supérieure à zéro et inférieure à la valeur d'impulsion de courant spécifiée (I_{high}) et, après l'intervalle de temps de commutation (Δₜₒₜₐₗ), l'intensité de courant (I) du signal de commutation (28) est réduite à zéro (S2).

8. Procédé selon la revendication 7, l'intensité de courant (I) du signal de commutation (28) étant augmentée au moins trois fois pendant l'intervalle de temps de commutation (Δₜₒₜₐₗ) à la valeur d'impulsion de courant spécifiée (I_{high}) à chaque fois pour l'intervalle de temps d'impulsion spécifiée (Δtₚᵤₗₛ).

9. Procédé selon la revendication 8, pendant l'intervalle de temps de commutation (Δₜₒₜₐₗ) l'intensité de courant (I) du signal de commutation (28) étant réglée pendant chaque intervalle de temps intermédiaire (Δtᵢₙₜₑᵣ) entre deux intervalles de temps d'impulsion successifs (Δtₚᵤₗₛ) à une valeur intermédiaire respective de manière à ce que chacune des valeurs intermédiaires soit supérieure à une valeur intermédiaire d'un intervalle de temps intermédiaire ultérieur (Δtᵢₙₜₑᵣ) qui a été maintenue ultérieurement dans le même intervalle de temps de commutation (Δₜₒₜₐₗ).

10. Procédé selon l'une des revendications 7 à 9, une vanne (12) d'un système de freinage d'un véhicule, une vanne d'admission de roue et/ou une vanne de sortie de roue (12, 14) étant commutées électriquement en tant que vanne magnétique à deux étages (12).
